# EUROPÄISCHE PATENTSCHRIFT

(11) **EP 1 400 379 B1**
(45) Veröffentlichungstag und Bekanntmachung des Hinweises auf die Patenterteilung: **01.02.2006**
(21) Anmeldenummer: 03021004.1
(22) Anmeldetag: 17.09.2003
(51) Int. Cl.: B60D 1/54

(54) **Anhängerkupplung**
Towing device for vehicles
Dispositif d'attelage pour véhicule

(30) Priorität: 18.09.2002 DE 10243433
(43) Veröffentlichungstag der Anmeldung: 24.03.2004
(73) Patentinhaber: Jaeger Cartronix GmbH, 61145 Friedberg (DE)
(72) Erfinder: Hachadorian, Gary, 63934 Röllbach (DE)
(74) Vertreter: KEIL & SCHAAFHAUSEN Patentanwälte

(56) Entgegenhaltungen:
- EP-A- 0 872 364
- EP-A- 1 153 770
- EP-A- 1 225 067
- DE-A- 10 004 523

## Beschreibung

Die Erfindung bezieht sich auf eine Anhängerkupplung für Fahrzeuge, insbesondere Kraftfahrzeuge wie Personenkraftwagen, mit einer üblicherweise an ihrem freien Ende eine Kupplungskugel tragenden gekrümmten Kupplungsstange, welche mittels eines motorischen Antriebes und eines an dem anderen Ende der Kupplungsstange angreifenden Getriebes zwischen einer Betriebsstellung in oder im Wesentlichen in einer vertikalen Fahrzeuglängsebene und einer Ruhestellung in einem Winkel, vorzugsweise quer, zu der vertikalen Fahrzeuglängsebene, und wenigstens teilweise hinter dem Stoßfänger hin und her schwenkbar ist.

Derartige bekannte Anhängerkupplungen (vgl. z.B. DE 196 12 962 A1) haben den Nachteil des großen Platzbedarfes und der Schwierigkeit, die gekrümmte Kupplungsstange in ihrer Ruhestellung, wenn sie nicht gebraucht wird, möglichst vollständig hinter den rückwärtigen Stoßfänger verschwinden zu lassen.

Aus der DE 100 04 523 A1 ist eine zwischen einer Gebrauchsstellung und einer Nichtgebrauchsstellung verstellbare Anhängerkupplung bekannt, die um eine vertikale Achse schwenkbar und entlahg dieser Achse axial verschiebbar ist. Eine ähnliche Anhängerkupplung ist in der EP 1 225 067 A2 beschrieben, bei der die Anhängerkupplung um eine verkippbare Achse verdrehbar gelagert ist.

In der EP 0 872 364 A1 wird eine schwenkbare Anhängerkupplung offenbart, bei der eine Anhängersteckdose in den Kugelhals integriert ist.

Aufgabe der vorliegenden Erfindung ist es, eine Anhängerkupplung zu schaffen, welche kompakt und einfach, d. h. mit wenigen Bauteilen, im Aufbau sowie schnell in der Betätigung, d. h. von der Betriebsstellung in die Ruhestellung und umgekehrt In geringst möglicher Zeit überführbar, ist, bei welcher die Kupplungsstange in ihrer Ruhestellung nahezu vollständig hinter dem hinteren Stoßfänger verschwenkt werden kann, insbesondere mit ihrem freien Ende.

Diese Aufgabe wird bei einer Anhängerkupplung der eingangs genannten Art erfindungsgemäß mit den Merkmalen des Anspruchs 1 insbesondere dadurch gelöst, dass die Kupplungsstange mit ihrem freien Ende mittels einer Kurvensteuerung auf einer durch diese vorgegebenen Kurve aus ihrer Betriebsstellung zunächst senkrecht und/oder schräg nach unten, dann seitlich in eine Schräglage unter dem Stoßfänger hindurch und schließlich hinter dem Stoßfänger wieder nach oben in die dortige Ruhestellung und wieder entsprechend umgekehrt zurück in die Betriebsstellung bewegbar ist. Es kommt dabei nicht wesentlich darauf an, dass die geschilderten Bewegungswege getrennt hintereinander ausgeführt werden, sondern sie können auch gleichzeitig und z. T. ineinander übergehend ausgeführt werden, so dass eine kontinuierliche Kurvenbewegung des freien Endes der Kupplungsstange aus seiner Betriebsstellung in seiner Ruhestellung und umgekehrt jeweils um den Stoßfänger herum erfolgt.

Dabei sollte die gekrümmte Kupplungsstange In ihrer Ruhestellung vorzugsweise in einer vertikalen oder im Wesentlichen vertikalen Ebene quer zu der Fahrzeuglängsachse liegen, so dass hinter dem Stoßfänger nur ein geringer Platzbedarf in der Tiefe benötigt wird.

In Verwirklichung des Erfindungsgedankens der Betätigung der Kupplungsstange über eine Kurvensteuerung weist letztere einen in einem oberen Gehäuseteil um eine vorzugsweise vertikale Achse drehend antreibbar aufgenommenen Leitkurvenkörper und einen mit diesem über zueinander zugewandte Kurvenflächen zusammenwirkenden, in einem unteren als Lager dienenden Gehäuseteil um die vertikale Achse drehbar, aber auch dieser gegenüber in seiner Neigung verschwenkbar gelagerten Schwenkkurvenkörper auf. Die beiden Kurvenkörper weisen in ihrem Inneren die zusammenwirkenden Kurvenflächen auf und können in ihrer Außengestalt ringförmig und/oder kugelförmig ausgebildet sein.

Vorzugsweise bestimmen dabei zusammenwirkende Kurvenflächen von Kur venkörpern die Kurvenböden der Kugelstange, insbesondere deren freies Ende mit der Kupplungskugel.

Ein weiteres bevorzugtes Erfindungsmerkmal besteht darin, dass der antreibbare Leitkugelkörper mit einem zu ihm koaxialen kugeligen Führungszapfen in eine entsprechende kugelige Führungsausnehmung des Schwenkkurvenkörper eingreift oder umgekehrt, so dass eine gute gegenseitige Zentrierung erfolgt.

Das Zusammenwirken der beiden Kurvenkörper wird ferner dadurch verbessert, wenn der Leitkurvenkörper gegen den Schwenkkurvenkörper federvorgespannt ist oder umgekehrt.

Es ist weiterhin von Vorteil, wenn das untere Gehäuseteil Anschläge für entsprechende Gegenflächen des Schwenkkurvenkörpers in Betriebsstellung und in Ruhestellung der Kupplungsstange aufweist. Hierdurch ergibt sich eine zuverlässige Endlagensteuerung für die Kupplungsstange, wobei der Antriebsmotor jeweils selbsttätig abschaltet, wenn die entsprechenden Endlagen erreicht sind.

Eine weitere konstruktiv vorteilhafte Einzelheit ergibt sich dann, wenn der Schwenkkurvenkörper durch eine Öffnung im Boden des unteren Gehäuseteils mit einem Antriebszapfen hindurchragt, an welchem die Kupplungsstange mit ihrem anderen Ende, vorzugsweise gegen eine andere austauschbar, befestigbar ist. Die Austauschbarkeit gewährleistet, dass ein und dieselbe Anhänger kupplung für verschiedene Fahrzeugtypen eingesetzt werden kann, wenn man lediglich unterschiedlich bemessene und/oder gestaltete Kupplungsstangen verwendet.

Das Getriebe ist vorzugsweise ein selbsthemmendes Schneckengetriebe, so dass der gesamte Führungsweg für die Kupplungsstange praktisch spielfrei durchfahren werden kann.

Das andere der Anbringung dienende Ende der Kupplungsstange ist vorzugsweise um etwas mehr als 90° um eine vertikale Achse drehbar.

Um unterschiedliche Drehwinkel von Kupplungsstange und Antriebszapfen zu ermöglichen, kann der Antriebszapfen gegenüber der Kupplungsstange, z. B. mittels federvorgespannter oder mittels Steuerkurve betätigbarer Stößel oder Nocken, selbsttätig kuppelbar und entkuppelbar sein.

Dabei kann die Verriegelung des Antriebszapfens gegenüber der Kupplungsstange mittels Exzentersteuerung erfolgen.

Mit der Erfindung wird femer vorgeschlagen, dass die horizontale Schwenkachse der Kupplungsstange durch den Schwerpunkt der Kupplungsstange führt.

Der vorzugsweise als Elektromotor ausgebildete Antrieb, von welchem nur ein einziger benötigt wird, kann bspw. an dem oberen Gehäuseteil, ebenfalls gegen einen anderen austauschbar, befestigt sein.

Für die Montage ist es von besonderem Vorteil, wenn das Gehäuse mit den darin aufgenommenen Kurvenkörpern und dem an dem Gehäuse angebrachten Antrieb sowie die an dem Antriebszapfen angeflanschte Kupplungsstange als Baueinheit z. B. an einem Querträger des Fahrzeugchassis befestigbar sind.

Ein weiterer Bedienungskomfort kann dadurch geboten werden, dass an der Kupplungsstange die erforderliche elektrische Anhängersteckdose angebracht und so mit dieser verschwenkbar ist. Auf diese Weise ist die Anhängersteckdose in Betriebsstellung der Kupplungsstange leicht zugänglich und in deren Ruhestellung geschützt und unsichtbar hinter dem Stoßfänger positioniert

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von deren Zusammenfassung in einzelnen Ansprüchen oder deren Rückbeziehung.

Es zeigen:
- Fig. 1: in auseinandergezogener Darstellung eine aus einem oberen Gehäuseteil, einem unteren Gehäuseteil und einer Kupplungsstange nach einem Ausführungsbeispiel der Erfindung aufgebaute Anhängerkupplung,
- Fig. 2: die Anhängerkupplung von Fig. 1 in Betriebsstellung, aus rückwärtiger Sicht auf ein Kraftfahrzeug,
- Fig. 3: die Anhängerkupplung gemäß Fig. 2, wobei sich die Kupplungsstange auf ihrem Weg von der in Fig. 2 dargestellten Betriebsstellung in die in Fig. 4 dargestellte Ruhestellung befindet,
- Fig. 4: einen Blick hinter den Stoßfänger, hinter welchem die Anhängerkupplung einschließlich der in Ruhestellung befindlichen Kupplungsstange abgedeckt untergebracht ist,

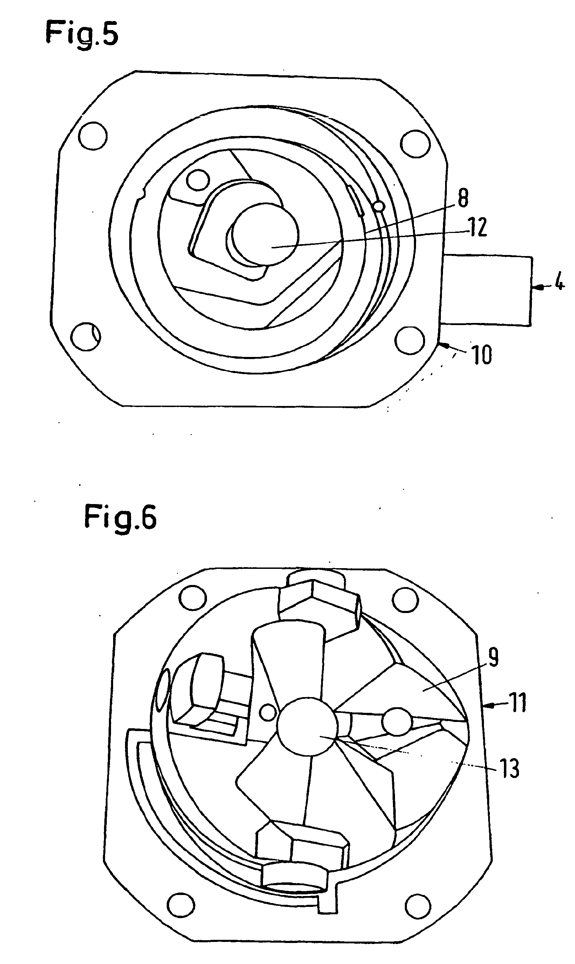

- Fig. 5: eine Ansicht des oberen Gehäuseteils mit dem darin antreibbar aufgenommenen Leitkurvenkörper,

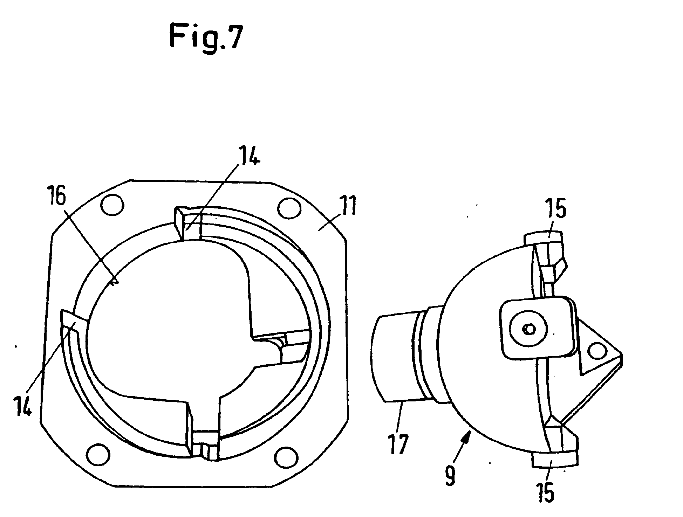

- Fig. 6: eine Draufsicht des unteren Gehäuseteils mit dem darin drehbar und schwenkbar gelagerten Schenkkurvenkörper, und
- Fig. 7: den unteren Gehäuseteil sowie den im Betrieb darin aufgenommenen Schwenkkurvenkörper, auseinander genommen.

Die zeichnerisch dargestellte Ausführungsform einer erfindungsgemäßen Anhängerkupplung weist eine gekrümmte Kupplungsstange 3 auf, welche an ihrem freien Ende 1 in üblicher Weise eine Kupplungskugel 2 trägt. An der Kupplungsstange 3 seitlich angebracht und mit ihr verschwenkbar ist auch eine Anhängersteckdose 19. Mit ihrem dem freien Ende 1 gegenüberliegenden anderen der Anbringung dienenden Ende 5 ist die Kupplungsstange 3 an einem Antriebszapfen 17 eines in einem unteren Gehäuseteil 11 dreh- und schwenkbar gelagerten Schwenkkurvenkörpers 9 befestigbar. Der Antriebszapfen 17 ragt durch eine die Verschwenkung der Kupplungsstange 3 zulassenden Öffnung 16 im Boden des unteren Gehäuseteils 11 heraus. Der Schwenkkurvenkörper 9 wirkt mit seiner nach oben weisenden Kurvenfläche mit einer nach unten weisenden Kurvenfläche eines Leitkurvenkörpers 8 zusammen, welcher In einem oberen Gehäuseteil 10 von einem z. B. von einem Elektromotor gebildeten Antrieb 4 über ein Getriebe 6 um eine vertikale Achse drehend antreibbar aufgenommen ist. Sind die beiden Gehäuseteile 10, 11 miteinander verbunden, greift der Leitkurvenkörper 8 mit einem an seiner Spitze kugeligen Führungszapfen 12 zur Zentrierung in eine entsprechend kugelige Führungsausnehmung 13 des unteren Gehäuseteils 11 ein.

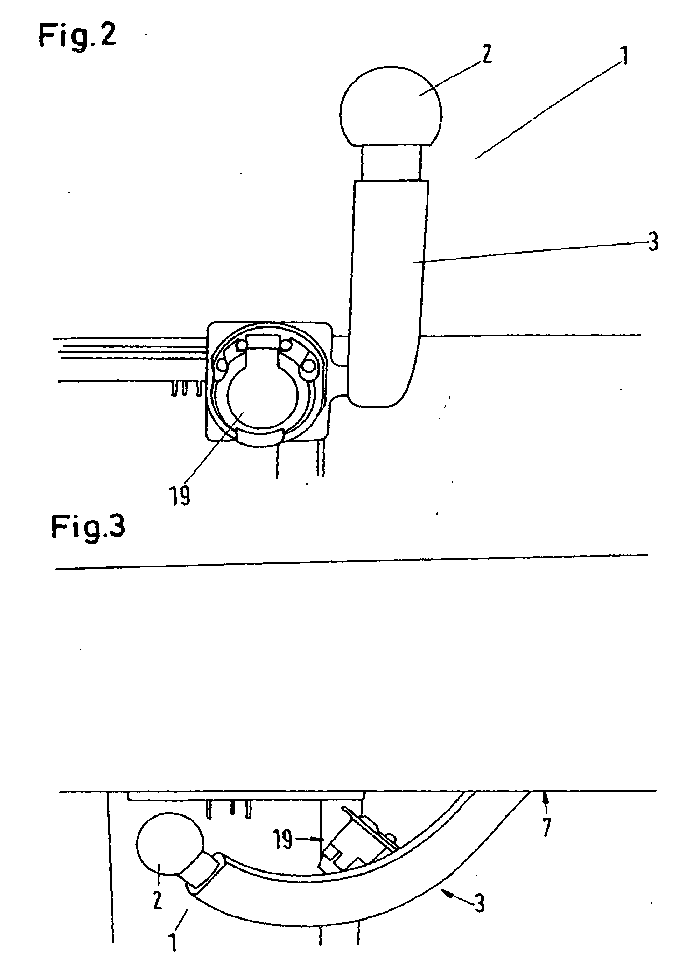

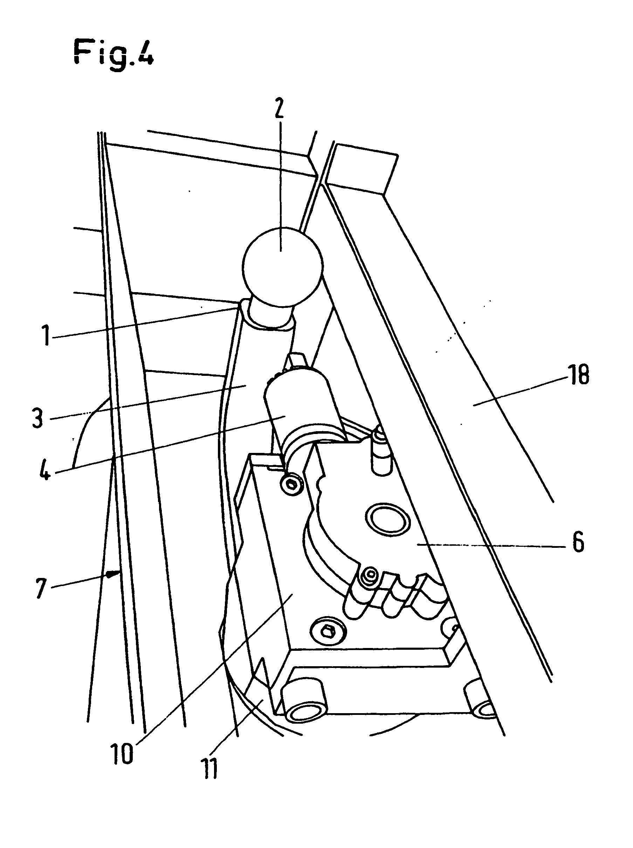

Mit Hilfe des bspw. als Elektromotor ausgebildeten Antriebes 4 kann das freie Ende 1 der Kupplungsstange 3 über das Gewinde 6, die beiden Kurvenkörper 8, 9 und den Antriebszapfen 17 aus der in Fig. 2 dargestellten Betriebsstellung auf einer definierten Kurvenbahn, auf welcher sich die Kupplungsstange 3 in Fig. 3 in einer Zwischenstellung befindet, bis in eine Ruhestellung, welche aus Fig. 4 ersichtlich ist, und wieder zurück bewegt werden. Die definierte Kurvenbahn ist von den zusammen wirkenden Kurvenflächen der aus den beiden Kurvenkörpern 8, 9 gebildeten Kurvensteuerung bestimmt und kann einfach an die fahrzeug-geometrischen Gegebenhelten angepasst werden. Dabei sind die zusammenwirkenden Kurvenflächen der beiden Kurvenkörper 8, 9 so ausgebildet, dass sich die Kupplungsstange 3 aus ihrer Betriebsstellung zunächst nach unten und zur Seite in eine Schräglage bewegt, so dass das freie Ende 1 der Kupplungsstange 3 einfach unterhalb des Stoßfängers 7 hindurch und dann wieder nach oben in ihre Ruhestellung überführt werden kann, wie aus der Abfolge der Fig. 2 bis 4 erkennbar ist Der umgekehrte Bewegungsweg der Kupplungsstange 3 verläuft entsprechend. Wie aus Fig. 4 erkennbar, nimmt die Kupplungsstange 3 in ihrer Ruhestellung eine Lage in einer vertikalen Ebene ein, welche senkrecht zu einer Fahrzeuglängsachse steht. Auf diese Weise nimmt die Kupplungsstange 3 in ihrer Ruhestellung nur einen geringen Raum in der Tiefe ein und ist weitgehend durch den Stoßfänger abgedeckt.

Ist das Gehäuse 10, 11, wie in Fig. 4 gezeigt, geschlossen, so liegen die beiden Kurvenkörper 8, 9 federvorgespannt mit ihren Kurvenflächen aneinander, so dass eine hohe Funktionssicherheit gewährleistet ist.

Insbesondere aus Fig. 7 ist erkennbar, dass der untere Gehäuseteil 11 im Bereich seiner Lagerfläche und der Schwenkkurvenkörper 9 zusammenwirkende Anschläge 14 und Gegenflächen 15 aufweisen, die den Bewegungsweg der Kupplungsstange 3 in der gewünschten Weise beschränken, wobei der Antrieb 4 bei Erreichen der jeweiligen Endstellung (Ruhestellung bzw. Betriebsstellung) wegen Überlast abschaltet.

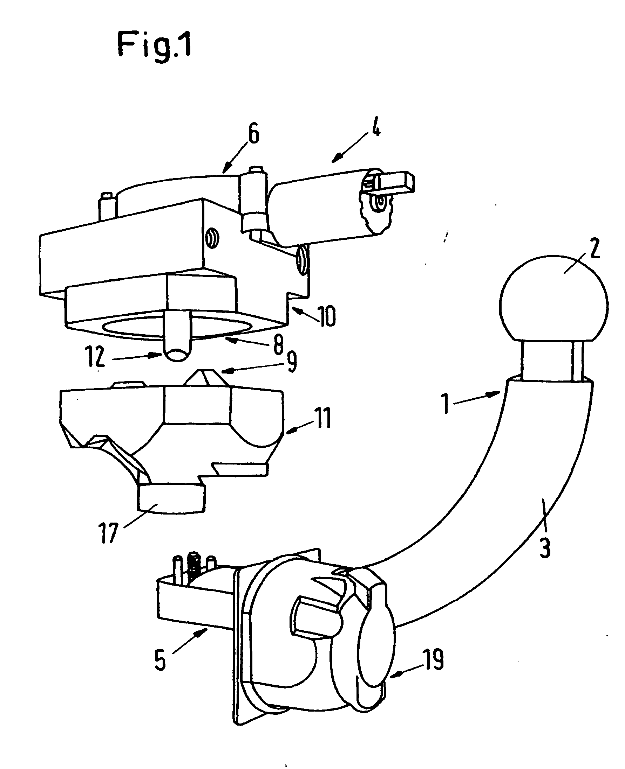

Der Antrieb 4 ist, wie insbesondere aus den Fig. 1 und 4 ersichtlich, seitlich an dem oberen Gehäuseteil 10 angeflanscht, in welchem auch das z. B. als selbsthemmendes Schneckengetriebe ausgebildete Getriebe 6 untergebracht ist Der Antrieb 4 ist damit ebenfalls, wie die Kupplungsstange 3, leicht auswechselbar.

Insbesondere aus Fig. 4 ist auch zu erkennen, dass das Gehäuse 10, 11 mit den darin aufgenommenen Kurvenkörpern 8, 9 und dem an dem Gehäuse 10. 11 angeflanschten Antrieb 4 sowie die an dem Antriebszapfen 17 angeflanschte Kupplungsstange 3 als kompakte Baueinheit an einem Querträger 18 des Fahrzeugchassis befestigt sein können.

### Bezugszeichenliste:

- 1: freies Ende
- 2: Kupplungskugel
- 3: Kupplungsstange
- 4: Antrieb
- 5: anderes Ende
- 6: Getriebe
- 7: Stoßfänger
- 8: Leitkurvenkörper
- 9: Schwenkkurvenkörper
- 10: oberes Gehäuseteil
- 11: unteres Gehäuseteil
- 12: Führungszapfen
- 13: Führungsausnehmung
- 14: Anschläge
- 15: Gegenanschläge
- 16: Öffnung
- 17: Antriebszapfen
- 18: Querträger
- 19: Anhängersteckdose

## Patentansprüche

1. Anhängerkupplung für Fahrzeuge, Insbesondere Kraftfahrzeuge wie Personenkraftwagen, mit einer üblicherweise an ihrem freien Ende (1) ein Kupplungskugel (2) tragenden gekrümmten Kupplungsstange (3), welche mittels eines motorischen Antriebes (4) und eines an dem anderen Ende (5) der Kupplungsstange (3) angreifenden Getriebes (6) zwischen einer Betriebsstellung in oder im Wesentlichen in einer vertikalen Fahrzeuglängsebene und einer Ruhestellung in einem Winkel, vorzugsweise quer, zu der vertikalen Fahrzeuglängsebene und wenigstens teilweise hinter dem Stoßfänger (7) hin und her schwenkbar ist, wobei die Kupplungsstange (3) mit ihrem freien Ende (1) auf eine, vorgegebenen Kurve aus ihrer Betriebsstellung zunächst senkrecht und/oder schräg nach unten, dann seitlich in eine Schräglage unter dem Stoßfänger (7) hindurch und schließlich hinter dem Stoßfänger (7) wieder nach oben in die dortige Ruhestellung und wieder entsprechend umgekehrt zurück in die Betriebsstellung bewegbar ist, **dadurch gekennzeichnet, dass** eine Kurvensteuerung (8, 9) vorgesehen ist, die einen in einem oberen Gehäuseteil (10) um eine vorzugsweise vertikale Achse drehend antreibbar aufgenommenen Leitkurvenkörper (8) und einen mit diesem Ober zueinander zugewandte Kurvenflächen zusammenwirkenden, in einem unteren als Lager dienenden Gehäuseteil (11) um diese Achse drehbar aber auch dieser gegenüber in seiner Neigung verschwenkbar gelagerten Schwenkkurvenkörper (9) aufweist

2. Anhängerkupplung nach Anspruch 1, **dadurch gekennzeichnet, dass** die gekrümmte Kupplungsstange (3) in ihrer Ruhestellung in einer vertikalen oder im Wesentlichen vertikalen Ebene, vorzugsweise quer zur Fahrzeuglängsachse liegt.

3. Anhängerkupplung nach einem der vorhergehenden Ansprüche, **dadurch gekennzeichnet, dass** zusammenwirkende Kurvenflächen von Kurvenkörpern (8, 9) die Steuerkurve der Kupplungsstange (3) bestimmen.

4. Anhängerkupplung nach einem der vorhergehenden Ansprüche, **dadurch gekennzeichnet, dass** der antreibbare Leitkurvenkörper (8) mit einem zu diesem koaxialen kugeligen Führungszapfen (12) in eine entsprechende kugelige Führungsausnehmung (13) des Schwenkkurvenkörpers (9) eingreift oder umgekehrt.

5. Anhängerkupplung nach einem der vorhergehenden Ansprüche, **dadurch gekennzeichnet, dass** der Leitkurvenkörper (8) gegen den Schwenkkurvenkörper (9) federvorgespannt ist.

6. Anhängerkupplung nach einem der vorhergehenden Ansprüche, **dadurch gekennzeichnet, dass** das untere Gehäuseteil (11) Anschläge (14) für entsprechende Gegenflächen (15) des Schwenkkurvenkörpers (9) in Betriebsstellung und in Ruhestellung der Kupplungsstange (3) aufweist.

7. Anhängerkupplung nach einem der vorhergehenden Ansprüche, **dadurch gekennzeichnet, dass** das Getriebe (6) ein selbsthemmendes Schneckengetriebe ist.

8. Anhängerkupplung nach einem der vorhergehenden Ansprüche, **dadurch gekennzeichnet dass** das andere Ende (5) der Kupplungsstange (3) um etwas mehr als 90° um eine vertikale Achse drehbar ist.

9. Anhängerkupplung nach einem der vorhergehenden Ansprüche, **dadurch gekennzeichnet, dass** der Schwenkkurvenkörper (9) durch eine Öffnung (16) im Boden des unteren Gehäuseteils (11) mit einem Antriebszapfen (17) hindurchragt, an welchem die Kupplungsstange (3) mit ihrem anderen Ende (5), vorzugsweise gegen eine andere austauschbar, befestigbar ist.

10. Anhängerkupplung nach Anspruch 9, **dadurch gekennzeichnet, dass** der Antriebszapfen (17) gegenüber der Kupplungsstange (3), z. B. mittels federvorgespannter oder mittels Steuerkurve betätigbarer Stößel, selbsttätig kuppelbar und entkuppelbar ist.

11. Anhängerkupplung nach einem der Ansprüche 9 oder 10, **dadurch gekennzeichnet, dass** die Verriegelung des Antriebszapfens (17) gegenüber der Kupplungsstange (3) mittels Exzentersteuerung erfolgt.

12. Anhängerkupplung nach einem der vorhergehenden Ansprüche, **dadurch gekennzeichnet, dass** die horizontale Schwenkachse der Kupplungsstange (3) durch den Schwerpunkt der Kugelstange (3) führt.

13. Anhängerkupplung nach einem der vorhergehenden Ansprüche, **dadurch gekennzeichnet, dass** der vorzugsweise als Elektromotor ausgebildete Antrieb (4) an dem oberen Gehäuseteil (10), vorzugsweise gegen einen anderen austauschbar, befestigbar ist

14. Anhängerkupplung nach einem der vorhergehenden Ansprüche, **dadurch gekennzeichnet, dass** das Gehäuse (10, 11) mit den darin aufgenommenen Kurvenkörpern (8, 9) und dem an dem Gehäuse (10, 11) angeflanschten Antrieb (4) sowie die an dem Antriebszapfen (17) angeflanschte Kupplungsstange (3) als Baueinheit z, B. an einem Querträger (18) des Fahrzeugchassis befestigbar sind.

15. Anhängerkupplung nach einem der vorhergehenden Ansprüche, **dadurch gekennzeichnet, dass** an der Kupplungsstange (3) eine elektrische Anhängersteckdose (19) angebracht und so mit dieser verschwenkbar ist.

## Claims

1. A trailer coupling for vehicles, in particular motor vehicles such as private cars, comprising a curved coupling rod (3) which bears a coupling ball (2) at its free end (1) in the usual manner, and which can be swivelled to and fro - via a motor drive (4), and a gear (6) acting upon the other end (5) of the coupling rod (3) - between a working position in, or substantially in, a vertical longitudinal plane of the vehicle and a resting position which is at an angle, preferably perpendicular, to the vertical longitudinal plane of the vehicle and is located at least partly behind the bumper (7), in which case the free end (1) of the coupling rod (3) can be moved over a given curve from its working position, first vertically and/or diagonally downwards, then sideways through into a diagonal position underneath the bumper (7), and finally behind the bumper (7) can be moved upwards again into its resting position there, and in the corresponding reverse manner can be moved back again into the working position, **characterized in that** a curve control (8, 9) is provided which comprises a guiding cam body (8), accommodated in an upper housing portion (10) and driven in rotation about a preferably vertical axis, and a swivelling cam body (9) which cooperates with said guiding cam body (8) via cam surfaces facing one another and is mounted in a lower housing portion (11), serving as a support, in such a way as to be rotatable about this axis but also swivellable in respect of its inclination relative to said axis.

2. A trailer coupling according to Claim 1, **characterized in that**, in its resting position, the curved coupling rod (3) lies in a vertical or substantially vertical plane, preferably perpendicular to the longitudinal axis of the vehicle.

3. A trailer coupling according to one of the preceding claims, **characterized in that** cooperating cam surfaces of cam bodies (8, 9) determine the control curve of the coupling rod (3).

4. A trailer coupling according to one of the preceding claims, **characterized in that** the drivable guiding cam body (8) engages via a spherical guide pin (12), which is coaxial with said guiding cam body (8), in a corresponding spherical guide recess (13) of the swivelling cam body (9), or vice versa.

5. A trailer coupling according to one of the preceding claims; **characterized in that** the guiding cam body (8) is spring-preloaded against the swivelling cam body (9).

6. A trailer coupling according to one of the preceding claims, **characterized in that** the lower housing portion (11) has stops (14), for corresponding cooperating surfaces (15) of the swivelling cam body (9), in the working position and in the resting position of the coupling rod (3).

7. A trailer coupling according to one of the preceding claims, **characterized in that** the gear (6) is a self-locking worm gear.

8. A trailer coupling according to one of the preceding claims, **characterized in that** the other end (5) of the coupling rod (3) can be turned by a little more than 90° about a vertical axis.

9. A trailer coupling according to one of the preceding claims, **characterized in that** a drive journal (17) of the swivelling cam body (9) projects through an opening (16) in the floor of the lower housing portion (11), and the other end (5) of the coupling rod (3), which preferably can be replaced by another, can be attached to said drive journal (17).

10. A trailer coupling according to Claim 9, **characterized in that** the drive journal (17) can be automatically coupled and uncoupled in respect of the coupling rod (3), for example by means of a spring-preloaded push rod or by means of a push rod which can be operated by means of a control cam.

11. A trailer coupling according to one of Claims 9 or 10, **characterized in that** the drive journal (17) is locked into position in respect of the coupling rod (3) by means of eccentric gear control.

12. A trailer coupling according to one of the preceding claims, **characterized in that** the horizontal swivel axis of the coupling rod (3) passes through the centre of gravity of the ball rod (3).

13. A trailer coupling according to one of the preceding claims, **characterized in that** the drive (4), preferably taking the form of an electric motor, can be fixed to the upper housing portion (10) and preferably can be replaced by another.

14. A trailer coupling according to one of the preceding claims, **characterized in that** the housing (10, 11) together with the cam bodies (8, 9) accommodated therein and with the drive (4) flange-mounted on the housing (10, 11) as well as the coupling rod (3) flange-mounted on the drive journal (17) can be fixed as a unit on a cross strut (18), for example, of the vehicle chassis.

15. A trailer coupling according to one of the preceding claims, **characterized in that** an electric trailer connector socket (19) is provided on the coupling rod (3) and thus can swivel along with this.

## Revendications

1. Attelage de remorque pour véhicule, notamment pour des véhicules tels que des voitures particulières, avec une tige d'attelage cintrée (3) portant de façon usuelle à son extrémité libre (1) une boule (2), la tige (3) pouvant pivoter dans les deux sens entre une position d'utilisation située dans ou sensiblement dans un plan longitudinal vertical du véhicule, et une position de repos faisant un angle, de préférence droit, avec le plan longitudinal vertical et située au moins partiellement derrière le pare-chocs, à l'aide d'un entraînement motorisé (4) et d'un engrenage (6) venant en prise à l'autre extrémité (5) de la tige d'attelage (3), la tige d'attelage (3) pouvant être déplacée avec son extrémité libre (1) le long d'une courbe prédéfinie depuis sa position d'utilisation tout d'abord verticalement vers le bas et/ou de façon inclinée, puis sur le côté dans une position oblique en passant sous le pare-chocs (7) et enfin derrière le pare-chocs (7) à nouveau vers le haut jusqu'à la position de repos s'y trouvant, puis selon un parcours inversé correspondant jusqu'à la position d'utilisation, **caractérisé en ce qu'**il est prévu une commande à cames (8, 9) qui est munie d'un corps de came de direction (8) logé dans une partie supérieure de boîtier (10) tout en pouvant être entraîné en rotation autour d'un axe de préférence vertical, et d'un corps de came de basculement (9) coopérant avec le corps de came de direction par l'intermédiaire de surfaces de came dirigées les unes vers les autres, logé pivotant autour de cet axe dans une partie inférieure de boîtier (11) servant de logement mais dont l'inclinaison peut être basculée par rapport à cet axe.

2. Attelage de remorque selon la revendication 1, **caractérisé en ce que** la tige d'attelage cintrée (3), dans sa position de repos, est située dans un plan vertical ou essentiellement vertical, de préférence perpendiculaire à l'axe longitudinal du véhicule.

3. Attelage de remorque selon l'une des revendications précédentes, **caractérisé en ce que** des surfaces de came des corps de came (8, 9) coopérant entre elles déterminent le parcours de la tige d'attelage (3).

4. Attelage de remorque selon l'une des revendications précédentes, **caractérisé en ce que** le corps de came de direction (8) pouvant être entraîné en déplacement vient en prise avec un tenon de guidage (12) sphérique coaxial à celui-ci dans un évidement de guidage (13) sphérique correspondant du corps de came de basculement (9) ou inversement.

5. Attelage de remorque selon l'une des revendications précédentes, **caractérisé en ce que** le corps de came de direction (8) est précontraint par ressort contre le corps de came de basculement (9).

6. Attelage de remorque selon l'une des revendications précédentes, **caractérisé en ce que** la partie inférieure de boîtier (11) est munie de butées (14) pour des surfaces correspondantes (15) du corps de came de basculement (9) en position d'utilisation et en position de repos de la tige d'attelage (3).

7. Attelage de remorque selon l'une des revendications précédentes, **caractérisé en ce que** l'entraînement (6) est un engrenage à vis sans fin à blocage automatique.

8. Attelage de remorque selon l'une des revendications précédentes, **caractérisé en ce que** l'autre extrémité (5) de la tige d'attelage (3) peut pivoter autour d'un axe vertical d'un peu plus de 90°.

9. Attelage de remorque selon l'une des revendications précédentes, **caractérisé en ce que** le corps de came de basculement (9) dépasse avec un tourillon menant (17) à travers une ouverture (16) réalisée dans le fond de la partie inférieure de boîtier (11), la tige d'attelage (3) pouvant être fixée audit tourillon par son autre extrémité (5) en étant de préférence échangeable contre une autre.

10. Attelage de remorque selon la revendication 9, **caractérisé en ce que** le tourillon menant (17) peut être accouplé ou découplé de façon automatique par rapport à la tige d'attelage (3), par exemple au moyen d'un coulisseau précontraint par ressort ou actionnable au moyen d'une came de commande.

11. Attelage de remorque selon l'une des revendications 9 ou 10, **caractérisé en ce que** le verrouillage du tourillon menant (17) vis-à-vis de la tige d'attelage (3) se fait au moyen d'une commande à excentrique.

12. Attelage de remorque selon l'une des revendications précédentes, **caractérisé en ce que** l'axe de pivotement de la tige d'attelage (3) passe à travers le centre de gravité de la tige d'attelage (3).

13. Attelage de remorque selon l'une des revendications précédentes, **caractérisé en ce que** l'entraînement (4) conçu de préférence sous forme d'un moteur électrique, peut être fixé à la partie supérieure de boîtier (10), de préférence en pouvant être échangé contre un autre.

14. Attelage de remorque selon l'une des revendications précédentes, **caractérisé en ce que** le boîtier (10, 11) avec les corps de came (8, 9) logés à l'intérieur et l'entraînement (4) bridé au boîtier (10, 11) ainsi que la tige d'attelage (3) bridée au tourillon menant (17) peuvent être fixés sous la forme d'une unité par exemple à une traverse (18) du châssis du véhicule.

15. Attelage de remorque selon l'une des revendications précédentes, **caractérisé en ce qu'**une prise électrique (19) est installée sur la tige d'attelage (3) en pouvant ainsi être basculée avec celle-ci.
